# EUROPÄISCHE PATENTANMELDUNG

(11) **EP 1 440 844 A2**
(43) Veröffentlichungstag der Anmeldung: **28.07.2004**
(21) Anmeldenummer: 03027920.2
(22) Anmeldetag: 04.12.2003
(51) Int. Cl.: B60Q 3/02

(54) **Anordnung zur Farb- und Helligkeitssteuerung der Beleuchtung in einer Passagierkabine eines Flugzeuges**

(30) Priorität: 23.01.2003 DE 10302499
(71) Anmelder: Airbus Deutschland GmbH, 21129 Hamburg (DE)
(72) Erfinder: Reitmann, Jörg, 21698 Harsefeld (DE); Gödecke, Rolf, 21147 Hamburg (DE)
(74) Vertreter: Hansmann, Dierk, Dipl.-Ing.

(57) **Zusammenfassung**

Anordnung zur Farb- und Helligkeitssteuerung der Beleuchtung in einer Passagierkabine eines Flugzeuges unter Verwendung einer im Brennpunkt eines Reflektors (2) angeordneten, weißes Licht aussendenden Lichtquelle (1),

Um je nach Vorgabe die durchlässige lichtmenge für verschiedene Farben steuern zu können, ist vorgesehen, dass das von der Lichtquelle (1) ausgesandte Licht über ein Linsenarray (2) auf ein, mindestens aus drei unterschiedlichen Farbbereichen (rot,grün,blau) abgestimmtes Farbfilterelement (3) gerichtet ist. Dem Farbfilterelement (3) ist eine Flüssigkeitsschicht (4) mit unterschiedlichen Kristallsegmenten (r,g,b) nachgeordnet, deren Struktur der Farbbereichsstruktur (rot,grün,blau) des Farbfilterelementes (3) entspricht. Die jeweils einer vorgegebenen Farbe (rot,grün,blau) zugeordneten Kristallsegmente (r,g,b) der Flüssigkeitsschicht (4) sind derart geregelt, dass die gewählte Farbe des Lichtes in der Passagierkabine sich aus dem Verhältnis der Intensität der gefilterten Lichtfarben (rot,grün,blau) zueinander und/oder dass die gewünschte Helligkeit des Lichtes in der Passagierkabine sich aus der Summe des von den Kristallsegmenten (r,g,b) der Flüssigkeitsschicht (4) durchgelassenen Lichtes ergibt.

## Beschreibung

"Anordnung zur Farb- und Helligkeitssteuerung der Beleuchtung in einer Passagierkabine eines Flugzeuges"

Die Erfindung betrifft eine Anordnung zur Farb- und Helligkeitssteuerung der Beleuchtung in einer Passagierkabine eines Flugzeuges unter Verwendung einer im Brennpunkt eines Reflektors angeordneten, weißes Licht aussendenden Lichtquelle,

Bisherige Anordnungen zur Farb- und Helligkeitssteuerung von Passagierkabinen bestanden aus drei farbigen Leuchtstofflampen (rot, grün, blau) bzw. auch vier farbigen Leuchtstofflampen (rot, grün, blau, weiß), wobei eine Mischung des von den Leuchtstofflampen ausgesandten Lichtes erfolgte. Die Nachteile dieser Anordnung sind folgende:
- Das gleichmäßige Mischen der Farben aus drei diskreten farbigen Lichtquellen ist nicht möglich.
- Anordnungen aus drei bzw. vier Leuchtstofflampen benötigen zu viel Platz.
- Die Helligkeit lässt sich nur begrenzt regeln, da Leuchtstofflampen auf Grund ihres Funktionsprinzips nur einen eingeschränkten Regelungsbereich haben.

Der Erfindung liegt nun die Aufgabe zugrunde, eine Anordnung der eingangs genannten Art zu schaffen, mit der je nach Vorgabe die durchlässige Lichtmenge für verschiedene Farben gesteuert werden kann.

Die Aufgabe wird erfindungsgemäß dadurch gelöst, dass das von der Lichtquelle ausgesandte Licht über ein Linsenarray auf ein, mindestens aus drei unterschiedlichen Farbbereichen (rot, grün, blau) bestehendes Farbfilterelement gerichtet ist, dass dem Farbfilterelement eine Flüssigkeitsschicht mit unterschiedlichen Kristallsegmenten (r, g, b) nachgeordnet ist, deren Struktur der Farbbereichsstruktur (rot, grün, blau) des Farbfilterelementes entspricht, und dass die jeweils einer vorgegebenen Farbe (rot, grün, blau) zugeordneten Kristallsegmente (r, g, b) der Flüssigkeitsschicht derart geregelt sind, dass die gewählte Farbe des Lichtes in der Passagierkabine sich aus dem Verhältnis der Intensität der gefilterten Lichtfarben (rot, grün, blau) zueinander und / oder dass die gewünschte Helligkeit des Lichtes in der Passagierkabine sich aus der Summe des von den Kristallsegmenten (r, g, b) der Flüssigkeitsschicht durchgelassenen Lichtes ergibt.

Erfindungsgemäße Ausgestaltungen bestehen darin,
- dass der Flüssigkeitsschicht eine Streuscheibe zur Erzeugung von diffusem Licht nachgeordnet ist,
- dass das Farbfilterelement aus einer vorgegebenen Anzahl von nebeneinander liegenden licht-durchlässigen Farbstreifen besteht, die jeweils nur für eine vorgegebene Farbe lichtdurchlässig sind,
- dass drei nebeneinander liegende unterschiedliche Farbstreifen verwendet werden,
- dass die drei unterschiedlichen Farbstreifen als Gruppe mindestens zweimal, sich periodisch wiederholend nebeneinander angeordnet sind,
- dass das Farbfilterelement mit zugehörigen Farbstreifen und die Flüssigkeitsschicht mit ihren zugehörigen Farbbereichen in der Abdeckung bzw. in dem Reflektor der Lichtquelle integriert sind,
- dass die Streuscheibe ebenfalls in der Abdeckung bzw. in dem Reflektor der Lichtquelle integriert ist, und
- dass eine stufenlose Farb- und / oder Helligkeitsregelung des Lichtes in der Passagierkabine vorgesehen ist.

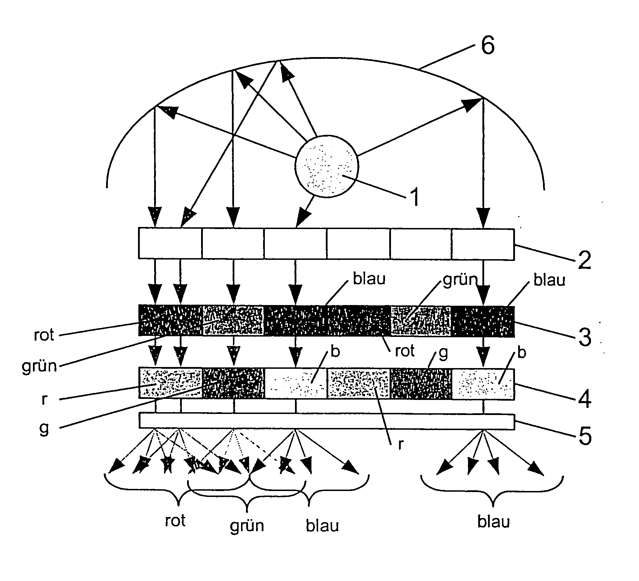

In der Zeichnung ist ein Ausführungsbeispiel nach der Erfindung dargestellt, und zwar zeigt die einzige Figur eine Anordnung zur stufenlosen Farb- und Helligkeitssteuerung der Beleuchtung in Passagierkabinen, welche in vorteilhafter Weise eine platzsparende Lösung darstellt, die erprobte Flüssigkristall-Technologie mit vorhandener Beleuchtungstechnik, z. B. Leuchtstofflampen, verbindet.

Die Anordnung besteht aus einer im Brennpunkt eines Reflektors 2 angeordneten Lichtquelle 1, einem Farbfilterelement 3 und einem elektronisch gesteuerten Apparat, der je nach Vorgabe die durchlässige Lichtmenge für jede Farbe steuert. Zwischen der Lichtquelle 1 und dem Farbfilterelement 3, welches drei unterschiedliche farblichtdurchlässige Bereiche "rot", "grün" und "blau" aufweist, ist ein Linsenarray 2 angeordnet, durch welches das von der Lichtquelle ausgesandte weiße Licht auf das Farbfilterelement 3 gerichtet wird. Das Farbfilterelement 3 lässt bereichsweise nur Licht einer bestimmten Farbe oder eines Farbbereichs durch, und zwar in dem gegebenen Beispiel die drei Farben / Farbbereiche rot, grün und blau. Das ausgefilterte farbige Licht wird durch eine Flüssigkristallschicht 4 mit unterschiedlichen Kristallsegmenten r, g und b geleitet, deren Struktur der Farbbereichsstruktur des Farbfilterelementes 3 entspricht. Die Flüssigkristallsegmente r, g und b, die zu je einer Farbe gehören, werden so geregelt, dass sich die gewählte Lichtfarbe für die Passagierkabine ergibt aus dem Verhältnis der Intensität der verschiedenen Lichtfarben zueinander. Die Helligkeit der Beleuchtung der Passagierkabine ergibt sich aus der Summe des durch die Flüssigkristallsegmente r, g und b durchgelassenen Lichtes. Eine Streuscheibe 5 sorgt - falls erforderlich - für eine diffuse Verteilung des Lichts.

Das Farbfilterelement 3 und die Flüssigkristallschicht 4 können derart in die Lampenabdeckung integriert werden, dass sich kein größerer Platzbedarf ergibt. Die Farbund Helligkeitsteuerung kann stufenlos erfolgen, da sich der Anteil jeder Farbe zwischen 0% und 100% regeln lässt bei einer Lichtquelle konstanter Intensität und Farbtemperatur. Als Faustregel gilt: Wenn keine Streuscheibe 2 benutzt wird, müsste bei einem Betrachtungsabstand von 1 m die Farbfilter- bzw. Flüssigkristallstreifen eine maximale Breite von 0,1 mm aufweisen, um unterhalb der Auflösung des menschlichen Auges zu liegen.

## Patentansprüche

1. Anordnung zur Farb- und Helligkeitssteuerung der Beleuchtung in einer Passagierkabine eines Flugzeuges unter Verwendung einer im Brennpunkt eines Reflektors angeordneten, weißes Licht aussendenden Lichtquelle,
**dadurch gekennzeichnet, dass** das von der Lichtquelle (1) ausgesandte Licht über ein Linsenarray (2) auf ein, mindestens aus drei unterschiedlichen Farbbereichen (rot, grün, blau) bestehendes Farbfilterelement (3) gerichtet ist, dass dem Farbfilterelement (3) eine Flüssigkeitsschicht (4) mit unterschiedlichen Kristallsegmenten (r, g, b) nachgeordnet ist, deren Struktur der Farbbereichsstruktur (rot, grün, blau) des Farbfilterelementes (3) entspricht, und dass die jeweils einer vorgegebenen Farbe (rot, grün, blau) zugeordneten Kristallsegmente (r, g, b) der Flüssigkeitsschicht (4) derart geregelt sind, dass die gewählte Farbe des Lichtes in der Passagierkabine sich aus dem Verhältnis der Intensität der gefilterten Lichtfarben (rot, grün, blau) zueinander und / oder dass die gewünschte Helligkeit des Lichtes in der Passagierkabine sich aus der Summe des von den Kristallsegmenten (r, g, b) der Flüssigkeitsschicht (4) durchgelassenen Lichtes ergibt.

2. Anordnung nach Anspruch 1, **dadurch gekennzeichnet, dass** der Flüssigkeitsschicht (4) eine Streuscheibe (5) zur Erzeugung von diffusem Licht nachgeordnet ist.

3. Anordnung nach Anspruch 1 oder 2, **dadurch gekennzeichnet, dass** das Farbfilterelement (3) aus einer vorgegebenen Anzahl von nebeneinander liegenden licht-durchlässigen Farbstreifen besteht, die jeweils nur für eine vorgegebene Farbe (rot, grün, blau) licht-durchlässig sind.

4. Anordnung nach Anspruch 3, **gekennzeichnet durch** drei nebeneinander liegende unterschiedliche Farbstreifen (rot, grün, blau).

5. Anordnung nach Anspruch 4, **dadurch gekennzeichnet, dass** die drei unterschiedlichen Farbstreifen (rot, grün, blau) als Gruppe mindestens zweimal, sich periodisch wiederholend nebeneinander angeordnet sind.

6. Anordnung nach Anspruch 1, 3, 4 oder 5, **dadurch gekennzeichnet, dass** das Farbfilterelement (3) mit zugehörigen Farbstreifen (rot, grün, blau) und die Flüssigkeitsschicht (4) mit ihren zugehörigen Farbbereichen (r, g, b) in der Abdeckung bzw. in dem Reflektor (6) der Lichtquelle (1) integriert sind.

7. Anordnung nach Anspruch 2 oder 6, **dadurch gekennzeichnet, dass** die Streuscheibe (5) ebenfalls in der Abdeckung bzw. in dem Reflektor (6) der Lichtquelle (1) integriert ist.

8. Anordnung nach einem der Ansprüche 1 bis 7, **gekennzeichnet durch** eine stufenlose Farb- und / oder Helligkeitsregelung des Lichtes in der Passagierkabine.
